# EUROPÄISCHE PATENTANMELDUNG

(11) **EP 1 312 730 A2**
(43) Veröffentlichungstag der Anmeldung: **21.05.2003**
(21) Anmeldenummer: 02024093.3
(22) Anmeldetag: 29.10.2002
(51) Int. Cl.: E04H 4/00, E04H 17/14, A47H 27/00, A01G 1/08, E04B 2/22

(54) **Bausatz zum Erstellen von Sandkästen für Kinder, Blumenkästen od. dgl.**

(30) Priorität: 15.11.2001 DE 20118621 U
(71) Anmelder: Winkler- Poroton-Ziegel GmbH, 79341 Kenzingen (DE)
(72) Erfinder: Winkler, Rinita, 79359 Riegel (DE)
(74) Vertreter: Zipse + Habersack

(57) **Zusammenfassung**

Die Erfindung betrifft einen Bausatz zum Erstellen von Sandkästen für Kinder, Blumenkästen, -umrandungen od. dgl. Der Bausatz ist gekennzeichnet durch trapezförmige Elemente (1) aus Klinkermaterial für die zusammengesetzte Umrandung des Kastens in einer der geometrischen Form entsprechenden Anzahl sowie auf die trapezförmigen Elemente (1) aufsetzbare, trapezförmige Holzplatten (5) als Sitzbänke in einer der geometrischen Form entsprechenden Anzahl.

## Beschreibung

Die Erfindung betrifft Bausatz zum Erstellen von Sandkästen für Kinder, Blumenkästen oder -umrandungen. Sie kann auch für Pflanzbeete, Kräuterbeete od. dgl. verwendet werden.

Derartige Sand- oder Blumenkästen bestehen im allgemeinen aus Holz und werden mit Sand oder Blumenerde gefüllt. Hierbei ist bekannt, daß Holzteile stark verwittern, so daß sie im Laufe der Zeit öfter repariert oder erneuert werden müssen.

Der vorliegenden Erfindung liegt die Aufgabe zugrunde, einen Bausatz zum Erstellen derartiger Sandkästen für Kinder oder Blumenkästen bzw.-umrandungen zu schaffen, mit dem der Kasten in einfacher Art und vielseitiger Gestaltung als Stecksystem leicht aufgebaut und erforderlichenfalls wieder abgebaut werden kann. Außerdem kann der Sandkasten, wenn er von den Kindern nicht mehr benutzt wird, als Blumenkasten bzw. -umrandung weiterhin verwendet werden.

Zur Lösung der gestellten Aufgabe wird ein Bausatz der eingangs genannten Art vorgeschlagen, der gekennzeichnet ist durch trapezförmige Elemente aus Klinkermaterial für die zusammengesetzte Umrandung des Kastens in einer der geometrischen Form entsprechenden Anzahl sowie auf die trapezförmigen Elemente aufsetzbare, trapezförmige Holzplatten als Sitzbänke in einer der geometrischen Form entsprechenden Anzahl.

Mit dem Bausatz gemäß der Erfindung wird der wesentliche Vorteil erreicht, daß der Kasten in beliebiger Größe schnell aufgebaut werden kann. Ferner ist auch seine Benutzung ohne Beschädigung durch Witterungseinflüsse für längere Zeit gewährleistet, insbesondere dann, wenn die aus den Holzplatten bestehenden Sitzbänke von den Klinkerelementen während der Wintermonate abgenommen und an einem trockenen Platz untergebracht werden.

Die trapezförmigen Klinkerelemente können zur Gewichtserleichterung eine Hochlochstruktur, z. B. Rundlöcher oder Rechtecklöcher, aufweisen. Sie können auch an den schrägen Seitenflächen Nut und Feder zum gegenseitigen Eingriff für den Zusammenhalt der Umrandung aufweisen. Die im gleichen Maße trapezförmigen Holzplatten, die als Sitze dienen, können an der Unterseite mit Zapfen zum Einstecken der Platte in Löchern in den Klinkerelementen versehen sein. Es können auch seitliche Führungsleisten an den Holzplatten vorgesehen sein.

Mit dem Bausatz können beliebige Formen polygoner Umrandungen hergestellt werden. So ist es beispielsweise möglich, pro Kasteneinheit mindestens fünfzehn trapezförmige Klinkerelemente mit fünfzehn entsprechenden Holzplatten der Kästen vorzusehen. Das Gleiche kann auch mit mindestens zwölf trapezförmigen Klinkerelementen und zwölf Holzplatten ausgeführt werden. Die Anzahl der Elemente und die entsprechende Größe eines Kastens ist dabei beliebig und hängt nur von der Breite der trapezförmigen Klinkerelemente und dem Winkel der beiden schrägen Seitenflächen zur Grundfläche eines Elementes ab.

Anhand der Zeichnungen soll am Beispiel einer bevorzugten Ausführungsform ein Sand- bzw. Blumenkasten gemäß der Erfindung näher erläutert werden.

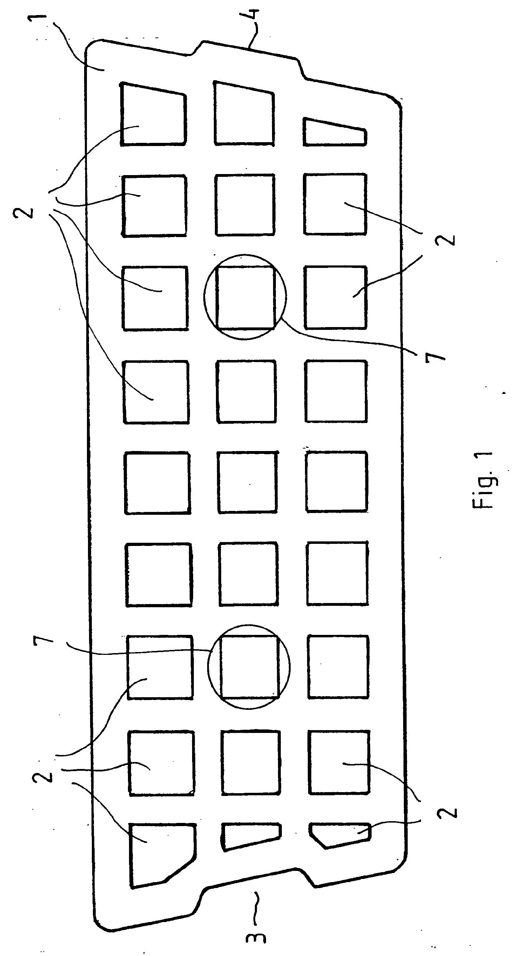

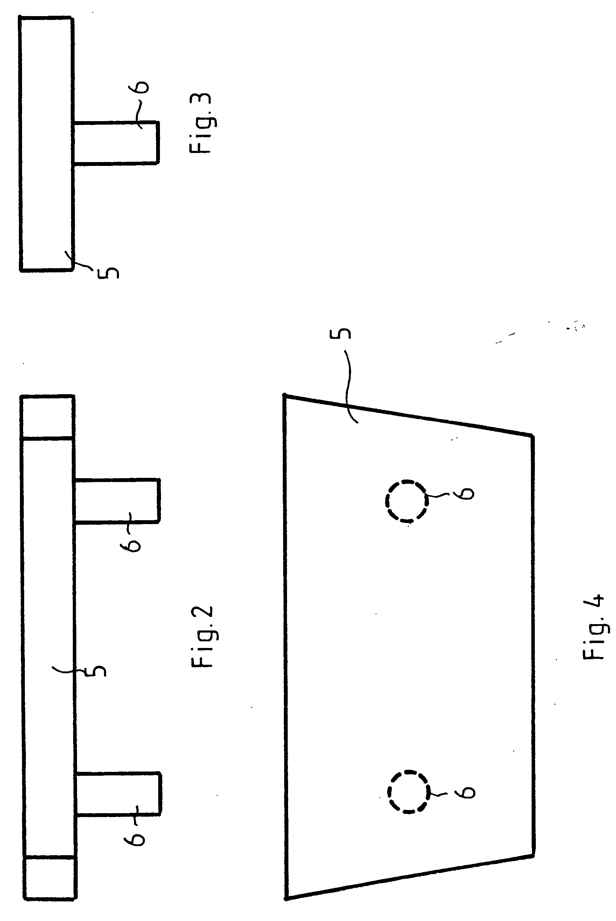

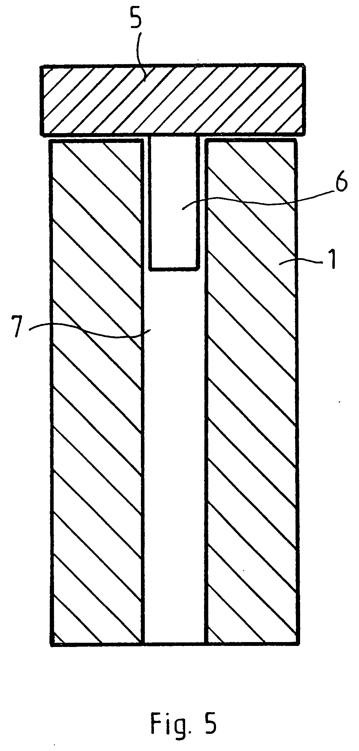

In den Zeichnungen zeigt
**Fig. 1**
   eine Draufsicht auf ein trapezförmiges Element des Bausatzes gemäß der Erfindung.
**Fig. 2**
   zeigt eine Frontansicht auf die als Sitzbank dienende Holzplatte.
**Fig. 3**
   zeigt eine Seitenansicht von Fig. 2.
**Fig. 4**
   zeigt eine Draufsicht auf die Holzplatte gemäß Fig. 2.
**Fig. 5**
   zeigt einen Schnitt durch ein trapezförmiges Element gemäß Fig. 1 in Verbindung mit einer Sitzbank aus Holz.
**Fig. 6**
   zeigt eine Draufsicht auf mehrere trapezförmige Elemente im Zusammenbau mit Nut und Feder.
**Fig. 7**
   zeigt eine Draufsicht auf einen zwölfteiligen bzw. zwölfeckigen Sandkasten.
**Fig. 8**
   zeigt eine Draufsicht auf einen fünfzehnteiligen bzw. fünfzehneckigen Sandkasten.
**Fig. 9**
   zeigt einen Schnitt gemäß Fig. 5, bei der die Holzsitzbank zwei seitliche Führungsleisten aufweist.

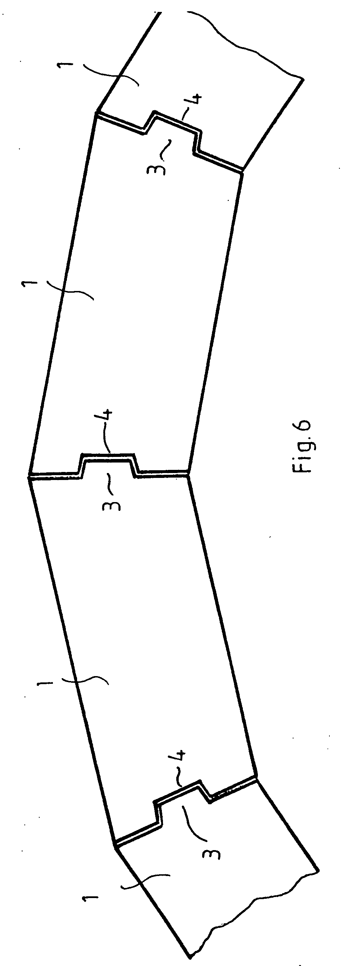

Wie sich aus den Figuren der Zeichnungen ergibt, besteht der Bausatz zum Erstellen von Sandkästen für Kinder, Blumenkästen od. dgl. aus trapezförmigen Elementen 1 aus Klinkermaterial für die zusammengesetzte Umrandung des Kastens. Das dargestellte trapezförmige Element weist eine Hochlochstruktur mit Hohlräumen 2 auf. An den schrägen Seiten der trapezförmigen Elemente ist je eine Feder 4 und eine Nut 3 vorgesehen, um die Elemente entsprechend Fig. 6 zusammenzusetzen. An den schrägen Seiten besteht die Möglichkeit, dass mehrere Federn und mehrere Nuten zum Ineinandergreifen vorgesehen sind.

Der Bausatz gemäß der Erfindung weist ferner eine der Anzahl der trapezförmigen Klinkerelemente entsprechende Anzahl trapezförmiger Holzplatten 5 auf, die an der Unterseite mit Zapfen 6 versehen sind. Diese Zapfen 6 dienen zum Einstecken in entsprechende, in den trapzeförmigen Klinkerelementen vorgesehene Löcher 7. Dieser Aufbau ist im Schnitt in Fig. 5 dargestellt. Die Zapfen können aus verschiedenen Materialien, wie z. B. Holz, Kunststoff, Metall od. dgl., bestehen.

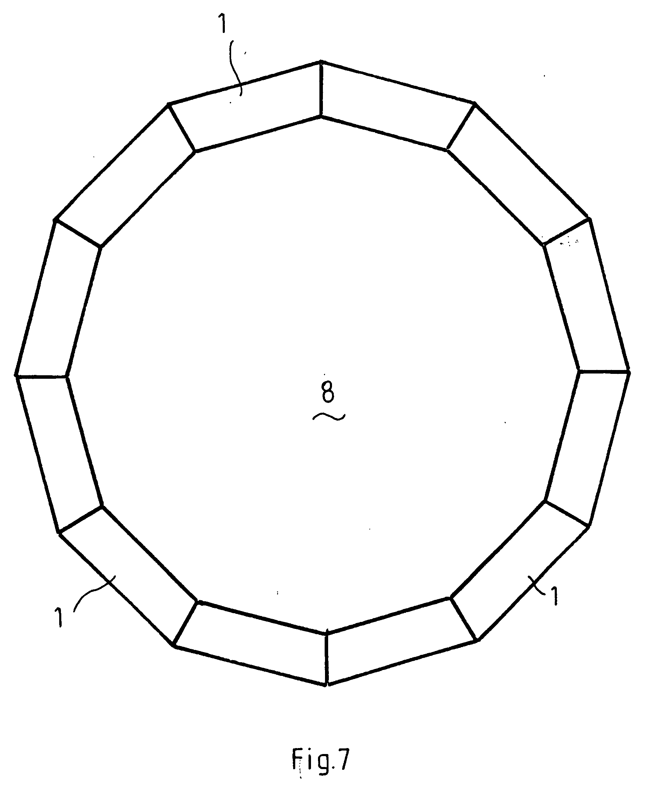

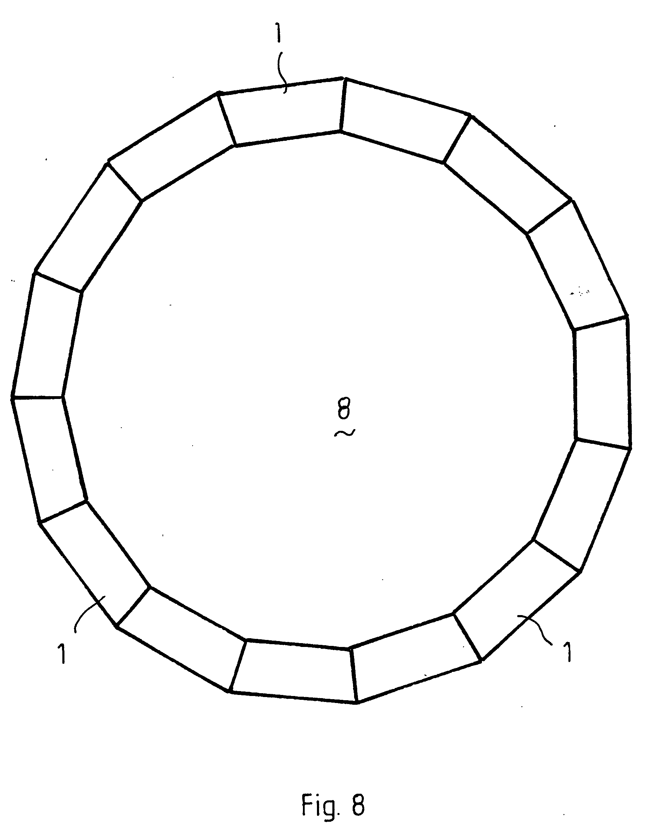

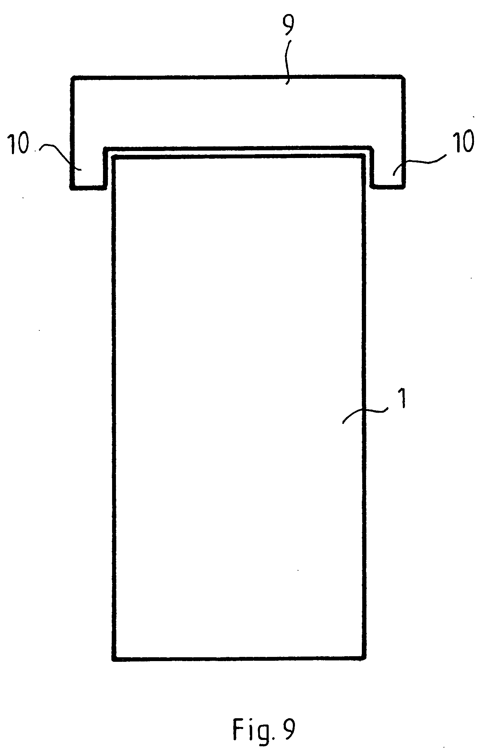

In Fig. 7 ist ein Kasten mit je zwölf Klinkerelementen und zwölf als Sitzbänke dienende Holzplatten dargestellt. Der Innenraum 8 kann mit Sand zum Spielen für Kinder oder mit Blumenerde gefüllt werden.

In Fig. 8 ist ein fünfzehnteiliger Aufbau mit entsprechend kleineren Klinkerelementen und Holzsitzbänken dargestellt.

Selbstverständlich kann durch Verändern der Winkel der Schrägseiten gegenüber der Grundfläche eine beliebige Anzahl von Sandkästen für Kinder oder Blumenkästen od. dgl. in Größe und Form hergestellt werden.

In Fig. 9 sind an der als Sitzbank dienenden Platte 9 zwei seitliche Führungsleisten 10 vorgesehen. Selbstverständlich kann auch die Sitzbank 9, 10 aus einem Stück aus Holz, Kunststoff od. dgl. bestehen.

## Patentansprüche

1. Bausatz zum Erstellen von Sandkästen für Kinder, Blumenkästen,-umrandungen od. dgl., ***gekennzeichnet durch*** trapezförmige Elemente (1) aus Klinkermaterial für die zusammengesetzte Umrandung des Kastens in einer der geometrischen Form entsprechenden Anzahl sowie auf die trapezförmigen Elemente (1) aufsetzbare, trapezförmige Holzplatten (5) als Sitzbänke in einer der geometrischen Form entsprechenden Anzahl.

2. Bausatz nach Anspruch 1, ***dadurch gekennzeichnet,* daß** die trapezförmigen Klinkerelemente (1) an den schrägen Seitenflächen Nuten (3) und Federn (4) zum gegenseitigen Eingriff zum Zusammensetzen der Umrandung aufweisen.

3. Bausatz nach Anspruch 1 und 2, ***dadurch gekennzeichnet,* daß** die trapezförmigen Klinkerelemente (1) eine Hochlochstruktur aufweisen.

4. Bausatz nach Anspruch 1, 2 oder 3, ***dadurch gekennzeichnet,* daß** an der Unterseite der trapezförmigen Holzplatten (5) Zapfen (6) zum Einstecken der Platte in Löcher (7) in den trapezförmigen Elementen (1) vorgesehen sind.

5. Bausatz nach einem oder mehreren der Ansprüche 1 bis 4, ***dadurch gekennzeichnet,* daß** pro Kasteneinheit zwölf trapezförmige Klinkerelemente und zwölf trapezförmige Holzplatten zur Bildung einer polygonen Umrandung des Kastens vorgesehen sind.

6. Bausatz nach einem oder mehreren der Ansprüche 1 bis 4, ***dadurch gekennzeichnet,* daß** pro Kasteneinheit fünfzehn trapezförmige Klinkerelemente und fünfzehn trapezförmige Holzplatten zur Bildung einer polygonen Umrandung des Kastens vorgesehen sind.

7. Bausatz nach Anspruch 4, ***dadurch gekennzeichnet,* dass** die als Sitzbank dienende Platte (9) zwei seitliche Führungsleisten (10) aufweist.
